# EUROPEAN PATENT SPECIFICATION

(11) **EP 0 338 814 B1**
(45) Date of publication and mention of the grant of the patent: **26.10.1994**
(21) Application number: 89303903.2
(22) Date of filing: 19.04.1989
(51) Int. Cl.: B60G 17/00, F16F 9/46

(54) **Automotive suspension system with variable suspension characteristics and variable damping force shock absorber therefor**
Kraftfahrzeugaufhängungssystem mit variablen Aufhängungscharakteristiken und Stossdämpfer mit veränderlicher Dämpfungskraft dafür
Système de suspension automobile à caractéristiques de suspension variables et amortisseur variable pour dito

(30) Priority: 19.04.1988 JP 53301/88; 28.04.1988 JP 58799/88; 04.11.1988 JP 279092/88
(43) Date of publication of application: 25.10.1989
(73) Proprietor: UNISIA JECS CORPORATION, Atsugi-shi Kanagawa-ken (JP)
(72) Inventor: Kakizaki, Shinobu, Atsugi-shi Kanagawa-ken (JP); Yamaoka, Fumiyuki, Atsugi-shi Kanagawa-ken (JP); Kikushima, Shigeru, Atsugi-shi Kanagawa-ken (JP); Emura, Junichi, Atsugi-shi Kanagawa-ken (JP)
(74) Representative: Blanco White, Henry Nicholas

(56) References cited:
- EP-A- 0 262 572
- EP-A- 0 337 797
- WO-A-87/07565
- US-A- 4 696 489
- US-A- 4 729 459
- US-A- 4 804 203

## Description

The present invention relates generally to a suspension system for an automotive vehicle, which is variable of suspension characteristics with high response characteristics. More specifically, the invention relates to an automotive suspension system which is variable of damping characteristics per every vibration cycles. The invention further relates to a variable damping shock absorber which is applicable for the automotive suspension system.

In the recent automotive technologies, respective automotive components have been required high performance and high response. In case of a suspension system, it has been required high level of riding comfort and driving stability. In order to achieve both of high level riding comfort and high level driving stability, high response against vibration input to the suspension system has been required.

One of the typical variable damping force suspension system has been disclosed in Japanese Patent First (unexamined) Publication (Tokkai) Showa 61-85210. In the disclosed system, a piezoelectric element is disposed in each shock absorber in each suspension system for detecting variation of fluid pressure in the shock absorber. A control unit is provided for receiving an input indicative of the fluid pressure provided from the piezoelectric element. The control unit outputs a controlled voltage to the piezoelectric element for switching operation mode of the shock absorber at least between SOFT mode in which smaller damping force is to be generated in response to vibration input and HARD mode in which greater damping force is to be generated in response to vibration input.

In general, the control unit is responsive to low frequency input vibration which induces attitude change of the vehicle body to switch the operational mode of the shock absorber into HARD mode for a given period of time. While the shock absorber is maintained at the HARD mode, the piezoelectric element maintains operation as an actuator for maintaining HARD mode operation of the shock absorber. Therefore, while it is active as the actuator, the piezoelectric element can not monitor fluid pressure.

In the modern technology of suspension control, it has been considered that varying of damping characteristics of shock absorber between a piston compression stroke in response to bounding motion between the vehicle body and a road wheel and a piston expansion stroke in response to rebounding motion between the vehicle body and the road wheel in order to obtain better vibration stabilizing performance. Therefore, it is desirable to adjust the damping characteristics of the shock absorber depending upon the mode of piston action. In order to realize this, it is essential to detect the piston action mode on the basis of variation of the fluid pressure in the shock absorber. However, as set forth above, since the piezoelectric element is held in operative as the fluid pressure sensing element while the shock absorber is maintained at the HARD mode.

This may cause problem in damping shocks. For example, when the damping characteristics in the HARD mode is set to generate relatively great damping force in response to vibration input, damping force generated in response to piston compression mode action can amplify the input vibration. This tendency may be significant for the second and subsequent vibration cycles. This clearly degrades vibration stabilizing performance of the vehicle to provide rough ride feeling.

In addition, in the prior proposed suspension system operates substantially in passive manner to detect the input vibration based on variation of fluid pressure in the shock absorber. Namely, until the vehicle driving condition is changed to require switching of suspension characteristics, the suspension system will never operate to switch suspension characteristics. Therefore, when a criterion of the fluid pressure to switch the suspension mode from SOFT mode to HARD mode is set at relatively high value in order to provide better riding comfort, switch from SOFT mode to HARD mode tends to delay to cause bottoming due to low response characteristics particularly at the initial stage of switching of suspension mode.

WO 87/07565, on which the preamble of claim 1 is based, discloses a suspension control system in which the suspension characteristics are switched from SOFT to HARD if the relative speed of the piston in the cylinder (determined by measuring the pressure difference between the working chambers on either side of the piston) exceeds a predetermined threshold.

US-A-4 696 489 discloses a suspension control system in which the suspension characteristics are set to HARD if the relative speed of the piston in the cylinder exceeds a predetermined threshold, or if the position of the piston in the cylinder moves away from an average position by more than a predetermined amount, except that the suspension characteristics are kept soft if the direction of movement of the wheel relative to the vehicle body is the same as the absolute direction of movement of the vehicle body.

It is an object of the present invention to provide a suspension system for an automotive vehicle, which can provide variable suspension characteristics according to a vehicle driving condition with high precision level and high response level.

Another object of the present invention is to provide a variable damping force shock absorber for use in the suspension system of the invention.

The invention provides an automotive suspension system comprising: a shock absorber comprising a cylinder tube connected with one of a vehicle body and a suspension member rotatably supporting a road wheel, and a piston which is connected with the other of said vehicle body and road wheel, and slidably received in said cylinder tube so as to divide the internal cavity of said cylinder tube into first and second working fluid chambers; fluid communication means for establishing fluid communication between said first and second chambers with a limited fluid flow rate for generating a damping force against relative motion between said piston and said cylinder tube; valve means associated with said fluid communication means for regulating the flow restriction of said fluid communication means to vary a damping characteristic of said shock absorber; sensing means for responding to a fluid pressure of said shock absorber and producing a first pressure signal; actuator means for manipulating said valve means to vary the flow restriction characteristic in response to a control signal; and controlling means for controlling the damping characteristic by producing said control signal in accordance with the pressure signal; characterised in that said controlling means determines a variation rate of the sensed pressure represented by said pressure signal, and varies the damping characteristic toward a hard mode when said pressure variation rate varies beyond a predetermined low range, and reaches a peak value.

The controlling means may be arranged to receive the piston stroke indicative signal, for deriving piston motion representative data on the basis of the piston stroke indicative signal, compare the piston motion representative data with a predetermined deadband criterion that is set with respect to a neutral value and defining a predetermined deadband, detect the piston motion representative data out of the deadband and reaching a peak value for producing the control signal for harder damping characteristics, and detect the piston motion representative data entering into the deadband.

The controlling means may be arranged to compare the piston motion representative data with predetermined deadband criteria which are set with respect to a neutral value, define a predetermined deadband for producing the control signal for harder damping characteristics, and detect the piston motion representative data varying across one of the deadband criteria to be out of the deadband.

The controlling means may be arranged to detect the pressure variation representative data varying across the neutral value for prroducing the control signal for softer damping characteristics. Instead, the controlling means may be arranged to detect the pressure variation representative data entering into the deadband for producing the control signal for softer damping characteristics.

Instead, the controlling means may be arranged to detect the pressure variation representative data varying across one of the deadband criteria to be out of the deadband for producing the control signal for softer damping characteristics.

The sensor means may comprise a first piezoelectric element and the actuating means a second piezoelectric element. The controlling means may increase the control signal value at a predetermined rate for increasing flow restriction at a predetermined rate. The controlling means may decrease the control signal value at a predetermined rate for decreasing flow restriction at a predetermined rate.

The automotive suspension may comprise a vehicle speed sensor for monitoring a vehicle speed to produce a vehicle speed indicative signal, and arithmetic means arranged to vary the deadband criteria according to variation of the value of the vehicle speed indicative signal.

The arithmetic means may continuously vary the deadband criteria for varying the width of the deadband according to variation of the value of the vehicle speed indicative signal. Alternatively, the arithmetic means may vary the deadband criteria for varying the width of the deadband in stepwise fashion according to variation of the value of the vehicle speed indicative signal. In the later case, the arithmetic means varies the width of the deadband between a first wider width and a second narrower width which is selected when the value of the vehicle speed indicative signal is greater than a predetermined first vehicle speed criterion. Furthermore, the arithmetic means may set a second vehicle speed criterion at a value smaller than the first vehicle speed criterion for switching the width of the deadband from the narrower width to the wider width when the vehicle speed indicative signal value decreases thereacross.

The present invention will be understood more fully from the detailed description of the invention given herebelow and from the accompanying drawings of the present invention, which, however, should not be taken to limit the invention to the specific embodiment, but are for explanation and understanding only.

In the drawings:
**Fig. 1** is a section of preferred embodiment of a variable damping force shock absorber according to the present invention, which is associated with a control unit implementing a preferred process of suspension control;
**Fig. 2** is an enlarged section of the major part of the preferred embodiment of the variable damping force shock absorber, according to the invention;
**Fig. 3** is a block diagram of the control unit employed in the preferred embodiment of an automotive suspension system and designed for implementing the preferred suspension control process;
**Fig. 4** is a detailed block diagram of the control unit of **Fig. 3**;
**Fig. 5** is circuit diagram of the simplified modification of an output circuit in the control unit;
**Fig. 6** is a timing chart showing variation of suspension mode in relation to variation of damping force to be generated in the shock absorber;
**Fig. 7** is a flowchart showing the preferred process of suspension control to be performed in the preferred embodiment of the suspension system;
**Fig. 8** is timing chart showing control operations performed in the preferred embodiment of the suspension system;
**Fig. 9** is a flowchart showing a modified process of suspension control to be preferred embodiment of the suspension system;
**Fig. 10** is a chart showing variation of a deadband in relation to a vehicle speed;
**Fig. 11** is a flowchart showing a routine for setting the deadband in relation to the vehicle speed;
**Fig. 12** is a chart showing another manner of variation of a deadband in relation to a vehicle speed;
**Fig. 13** is a flowchart showing a routine for setting the deadband in relation to the vehicle speed; and
**Fig. 14** is a flowchart showing another preferred routine for performing suspension control.

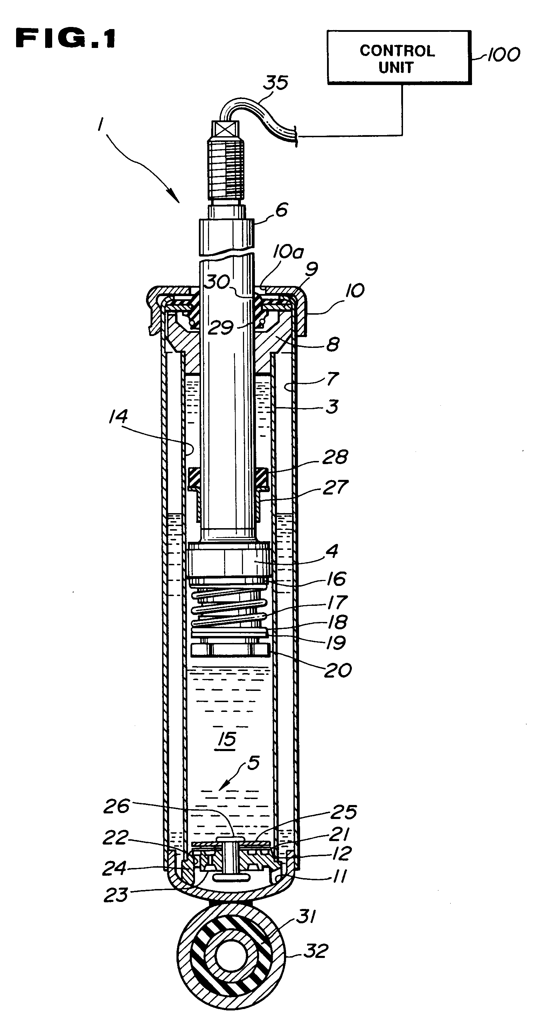

Referring now to the drawings, particularly to **Fig. 1**, the preferred embodiment of a shock absorber, according to the present invention, serves as a principle component of the preferred embodiment of an automotive suspension system, according to the invention. The shown shock absorber **1** comprises a double action type shock absorber variable of damping characteristics. The shock absorber **1** has inner and outer cylinder tubes **3** and **2**. The inner and outer cylinders **3** and **2** are arranged in coaxial arrangement for defining an annular chamber **7** which serves as a reservoir chamber.

A piston assembly **4** is disposed within the internal space of the inner cylinder tube **3** for dividing the internal space into upper and lower working chambers **14** and **15**. The piston assembly **4** is supported on the lower end of a piston rod **6**. The piston rod **6** is a guided by a rod guide **8** is engaged in the top end opening of the inner cylinder tube **3**. The rod guide **8** cooperates with a piston seal **9** and a stopper plate **10** to form an upper plug assembly for sealingly closing the top ends of the inner and outer cylinder tubes **3** and **2**.

The top end of the piston rod **6** is connected to a vehicle body (not shown) in per se known manner. On the other hand, a connecting eye **32** with an eye bushing **31** is provided on the lower end of the outer cylinder tube **2**. The outer cylinder tube **2** is connected to a suspension member (not shown) rotatably supporting a road wheel. By this, the shock absorber **1** is disposed between the vehicle body and the suspension member to receive vibration energy causing relative displacement between the vehicle body and the suspension member. The shock absorber **1** is compressed in response to bounding stroke motion, in which the vehicle body and the suspension member are shifted to approach to each other, and expanded in response to a rebounding stroke motion, in which the vehicle body and suspension member are shifted away to each other. In response to the bounding stroke motion of the vehicle body and the suspension member, the piston assembly **4** strokes in compression stroke direction with compressing the lower working chamber **15**. This causes increasing of working fluid pressure in the lower working chamber and decreasing of the working fluid pressure in the higher working chamber. On the other hand, in response to the rebounding stroke motion of the vehicle body and the suspension member, the piston assembly **4** strokes in expansion stroke direction with compressing the higher working chamber **14**. Therefore, the fluid pressure in the upper working chamber **14** is increased and the fluid pressure in the lower working chamber **15** is decreased. The fluid reservoir chamber **7** is normally maintained at a pressure substantially corresponding to fluid pressure in the lower working chamber **15**. stroke motion,

The lower end opening of the inner cylinder **3** is closed by a bottom valve assembly **12** which defines a communication path **11**. The bottom valve assembly **12** thus establishes fluid communication between the fluid reservoir chamber **7** and the lower working chamber **15**.

The piston assembly **4** accompanies an expansion valve **16** which is effective in a piston expansion stroke to produce a damping force. The expansion valve **16** is associated with a bias spring **17** which is active on the expansion valve **16** to constantly bias the latter in upward direction. The bias spring is mounted on the lower end of the piston rod **6** by means of an adjuster nut **18** and a lock nut **19**. An adjuster nut **20** also engages with the lower end of the piston rod **6**.

The bottom valve assembly **5** has a check valve **21** associated with a port **22** for openably closing the port. The check valve **21** is designed to open during piston expansion stroke to permit fluid flow from the reservoir chamber **7** to the lower working chamber **15**. The bottom valve **5** is also provided with a compression valve **23** which is associated with the lower end of an orifice **24** to open in response to compression stroke in order to establish fluid communication from the lower working chamber **15** to the reservoir chamber **7**. The check valve **21** and the compression valve **23** are mounted and secured on a bottom valve body **12** by means of a clamping pin **26**. A stopper plate **25** is also mounted on the bottom valve body **12** in order to restrict magnitude of opening of the check valve **21**. With the shown construction, the check valve **21** is responsive to the pressure difference between the lower working chamber **15** and the fluid reservoir chamber **7** to be shifted to the open position for introducing the working fluid in the fluid reservoir chamber into the lower working chamber. On the other hand, during piston compression stroke, pressure difference between the lower working chamber **15** and the fluid reservoir chamber **7** is created to shift the compression valve **23**. By opening of the compression valve **23**, a limited flow rate of the working fluid is permitted to flow from the lower working chamber **15** to the fluid reservoir chamber **7** with generating a damping force.

A rebounding stopper **28** which is made of an elastic material, such as a rubber, is mounted on the piston rod **6** by means of a retainer **27**. The rebounding stopper **28** protects the piston assembly **4** from direct collision onto the lower end of the rod guide **8**.

The stopper plate **10** is clamped onto the upper end of the outer cylinder tube **2**. The stopper **10** defines a center opening **10a**, through which the piston rod **6** extends. A rubber bushing (not shown) engages with the periphery of the center opening **10a** of the stopper plate **10** for slidingly and sealingly guide the piston rod **6**. A main lip **29** and a dust lip **30** are also provided in the upper plug assembly. The main lip **29** sealingly contact with the outer periphery of the piston rod for establishing a fluid tight seal. On the other hand, the dust lip **30** is provided in the vicinity of the stopper plate and contacts with the outer periphery of the piston rod **4** to establish fluid tight seal so as to prevent the muddy water, dust and so forth.

The piston assembly **4** is designed to vary damping characteristics to generate damping force in response to vibration input according to variable characteristics in different damping mode. In order to control the damping mode of the piston assembly **4**, a control unit **100** is connected to the piston assembly via a harness **35** which extends through the piston rod.

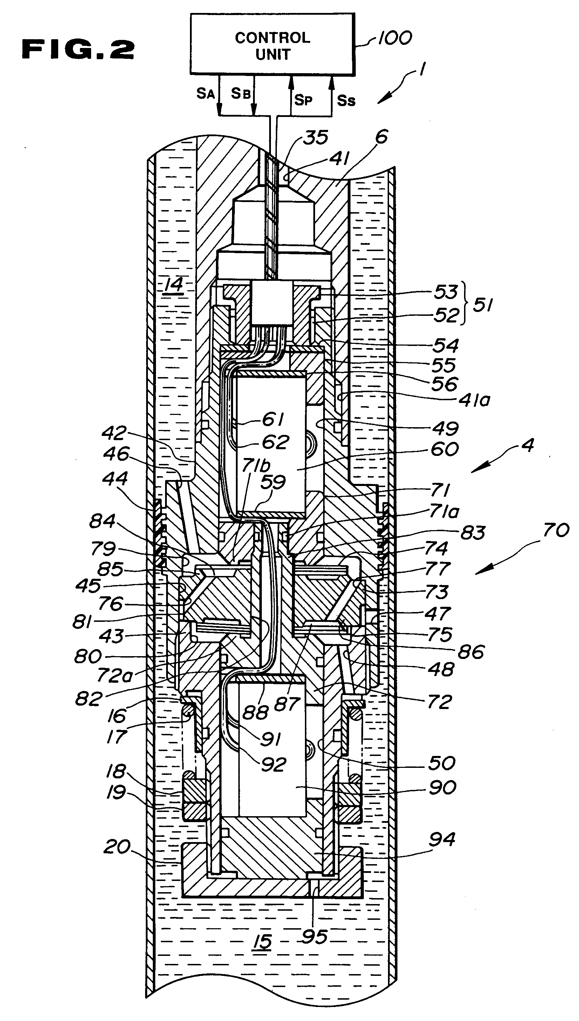

**Fig. 2** shows the detailed construction of the piston assembly **4** employed in the preferred embodiment of the shock absorber **1** of **Fig. 1**. As seen, the piston rod **6** defined an axially extending through opening **41** through which the wiring harness **35** extends. The lower end of the through opening **41** is communicated with a threaded groove **41a** forming a piston receptacle. The piston assembly **4** includes a piston body **42** which has an upward extension which threadingly engages with the threaded groove **41a** of the piston rod **6** so that the piston body **42** is firmly mounted on the lower end of the piston rod **6**. The piston body **42** has an outer periphery mating with the inner periphery of the inner cylinder **3**. A low friction seal member **44** which is made of a low friction material, such as a teflon, engages on the outer periphery of the piston body **42** for establishing the fluid tight seal between the inner periphery of the inner cylinder **3**. The piston body **42** has a threaded lower end, to which the upper end of a sleeve **43** engages. The aforementioned adjusting nut **18**, the lock nut **19** and the adjusting nut **20** are engaged onto the outer periphery of the lower end portion of the sleeve **43**.

The piston body **42** defines an internal space **45** which is in communication with the upper and lower working chambers via communication path **46** and **47** defined therethrough. On the other hand, the sleeve **43** defines a through opening **48** for communication between the internal space **45** and the lower working chamber **15**. The expansion valve **16** is associated with the end of the through opening **48** opening to the lower working chamber **15** so as to restrict fluid flow path area for generating damping force. The expansion valve **16** is responsive to a fluid pressure overcoming the spring force of the bias spring **17** to widen the path area for pressure relieving function.

The assembly of the piston body **42** and the sleeve **43** defines first and second chambers **49** and **50** of essentially circular cross section. These first and second chambers **49** and **50** have smaller diameter than the space **45** and communicated with the later. A first piezoelectric element **60** is disposed within the first chamber **49**. The first piezoelectric element **60** has an upper section associated with an adjusting mechanism **51**. The adjusting mechanism **51** comprises an adjuster screw **53** engaging with a female thread **52** formed on the inner periphery of the top end of the piston body **42**. The adjuster nut **53** has a lower end coupled with an upper end plate **56** fixed onto the upper end of the piezoelectric element **60** via a contact plate **54** and a cap **55**. The adjuster screw **53** is manually rotatable for axial shifting to cause axial displacement of the piezoelectric element **60**. The piezoelectric element **60** is associated with a slider member **71** via a lower end plate **59**.

Similarly, a second piezoelectric element **90** is disposed within the second chamber **50**. The second piezoelectric element **90** is supported within the second chamber by means of a cap **94** and the adjuster nut **20**, so that the axial position thereof can be adjusted by means of the adjusting nut. The upper end of the second piezoelectric element **90** is associated with a valve core **72** via an upper end plate **88**.

The slider **71** and the valve bore **72** are associated with a valve body **73** to form a damping mode control mechanism **70**. As seen, the valve body **73** is disposed within the space **45** to define therein upper and lower annular chambers **79** and **80**. The valve body **73** further defines an annular chamber **81** defined between the outer periphery of the valve body **73** and the inner periphery of the piston body **42**. The upper annular chamber **79** is in communication with the upper working chamber **14** via a communication path **48**. On the other hand, the lower annular chamber **80** is in communication with the flow working chamber **15** via the through opening **48**. The annular chamber **81** is in communication with the lower working chamber **15** with the fluid path **47**. The valve body **73** defines a center opening **82** through which an upper cylindrical section **83** of the valve core **72** extends, and communication orifices **76** and **77** . The communication orifice **76** opens to an annular groove **84** formed on the upper surface of the valve body and surrounded by an annular land **85**. The annular groove **84** is exposed to the upper annular chamber **79**. The communication orifice **76** also opens to the annular chamber **81**. On the other hand, the communication orifice **77** opens to an annular groove **87** formed on the lower surface of the valve body **72** and surrounded by an annular land **86**. The annular groove **86** is exposed to the lower annular chamber **80**. The communication orifice **77** also opens to the upper annular chamber **79**.

Upper and lower valve members **74** and **75** are provided for openably closing the annular grooves **84** and **87** and whereby blocking fluid communication between the annular grooves and the associated annular chambers **79** and **80**. The valve members **74** and **75** comprises leaf springs resiliently deformable in response to the pressure exerted thereto. Normally, the valve members **74** and **75** are supported at the center boss sections projecting at the center portion of valve body. At this position, the lever length of the valve members **74** and **75** is relatively large to have an initial stiffness to cause resilient deformation in response to the fluid pressure exerted thereto. On the other hand, when the annular projections **71b** and **72a** of the slider **71** and the valve core **72** are active on the valve member **74** and **75** when the slider and valve cores are operated by the effect of the piezoelectric elements **60** and **90**, the lever lengths of the valve members are reduced to increase stiffness for generating greater damping force in response to vibration input. In the following discussion, the damping mode where the valve member **74** and **75** operates in smaller stiffness, in which the annular projections **71b** and **72** of the slider and valve core are not active, will be referred to as SOFT mode. On the other hand, the damping mode where the annular projections are active to increase stiffness, will be hereafter referred to as HARD mode.

It should be noted that the valve members **74** and **75** can comprise a plurality of thin disc shaped relief springs for resilient deformation in response to the fluid pressure exerted thereonto.

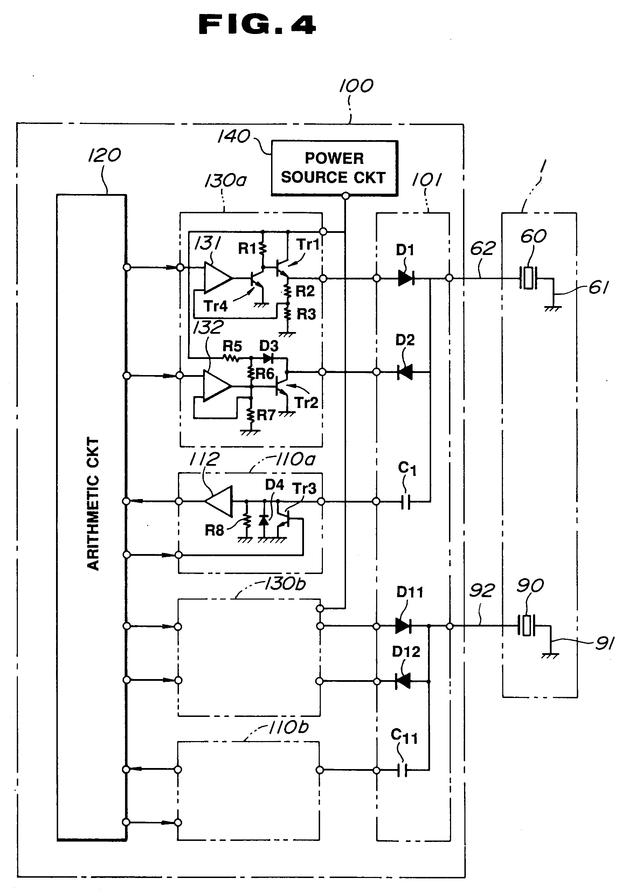

As seen from **Fig. 2**, the first and second piezoelectric elements **60** and **90** are connected to the control unit **100** via cables **61**, **62**, **91** and **92** which forms the wiring harness. As can be clearly seen from **Fig. 4**, the cables **61** and **91** connect respectively associated piezoelectric elements **60** and **90** to the ground. On the other hand, the cables **62** and **92** connect the piezoelectric elements **60** and **90**. Each of the piezoelectric elements **60** and **90** comprises a plurality of thin disc shaped piezoelectric plates piled up in series. Each of the piezoelectric plates respectively having a pair of electrodes. As is well known, when a voltage is applied to such piezoelectric plates to cause electrodistortion to expand and contact the axial length. The magnitude of electrodistortion is variable depending upon the magnitude of voltage applied to the piezoelectric plates. Such electrodistortion may cause mechanical distortion of the piezoelectric element to cause variation of the axial length.

On the other hand, when the fluid pressure is applied to the piezoelectric elements **60** and **90**, each of the piezoelectric plate as the components of the piezoelectric elements is caused mechanical distortion for producing an electric power. The magnitude of the electric power to be generated by the piezoelectric elements **60** and **90** is variable depending upon the magnitude of the mechanical distortion and whereby corresponding to the magnitude of the pressure exerted on the piezoelectric elements. In the practical construction, the first piezoelectric element **60** is subject a fluid pressure of the annular chamber **81** exerted on the valve member **74** which corresponds to the fluid pressure in the lower working chamber **15** via the slider. The first piezoelectric element **60** is thus produces a compression mode pressure indicative signal **Sp**. On the other hand, the second piezoelectric element **90** is subject fluid pressure in the upper annular chamber **79** exerted on the valve member via the valve member **75** and the valve core **72**, which fluid pressure corresponds to that in the upper fluid chamber **14**. The second piezoelectric element **90** thus produces a expansion mode pressure indicative signal **Ss**. As will be appreciated, the magnitude of the compression mode pressure indicative signal **Sp** and the expansion mode pressure indicative signal **Ss** are variable depending upon the magnitude of pressure in the upper and lower working chambers **14** and **15**. In addition, in the piston compression stroke, the fluid pressure in the lower working chamber **15** is also exerted on the second piezoelectric element **90** via the adjuster nut **20** and a cap **94**. Therefore, even in the piston expansion stroke, the second piezoelectric element **90** outputs the expansion mode pressure indicative signal **Ss**. Therefore, in the piston expansion stroke, only expansion mode pressure indicative signal **Ss** is output from the piezoelectric element **90**. On the other hand, in the piston compression stroke, both of the compression mode and expansion mode pressure indicative signals **Sp** and **Ss** are output from the first and second piezoelectric elements **60** and **90**.

The piezoelectric elements **60** and **90** feeds the compression mode pressure indicative signal **Sp** and the expansion mode pressure indicative signal **Ss** to the control unit **100**. The control unit **100** processes these compression mode and expansion mode pressure indicative signals **Sp** and **Ss** to produce an expansion mode control signal **S**_{**A**} and a compression mode control signal **S**_{**B**}. The expansion mode control signal **S**_{**A**} is fed to the first piezoelectric element **60** for controlling axial length thereof to adjust the position of the valve core **72** and whereby adjust the stiffness of the valve members **74** and **75**. By adjusting the stiffness of the valve member **75**, the damping characteristics in response to the piston expansion stroke can be switched between HARD mode and SOFT mode. Similarly, the compression mode control signal **S**_{**B**} is applied to the second piezoelectric element **90** for controlling the axial length thereof to adjust the position of the slider **71** relative to the valve members **74** and **75** and whereby adjusts the stiffness of the associated valve member in order to switch the damping mode between HARD mode and SOFT mode. By this, the damping characteristics in the piston compression stroke can be adjusted.

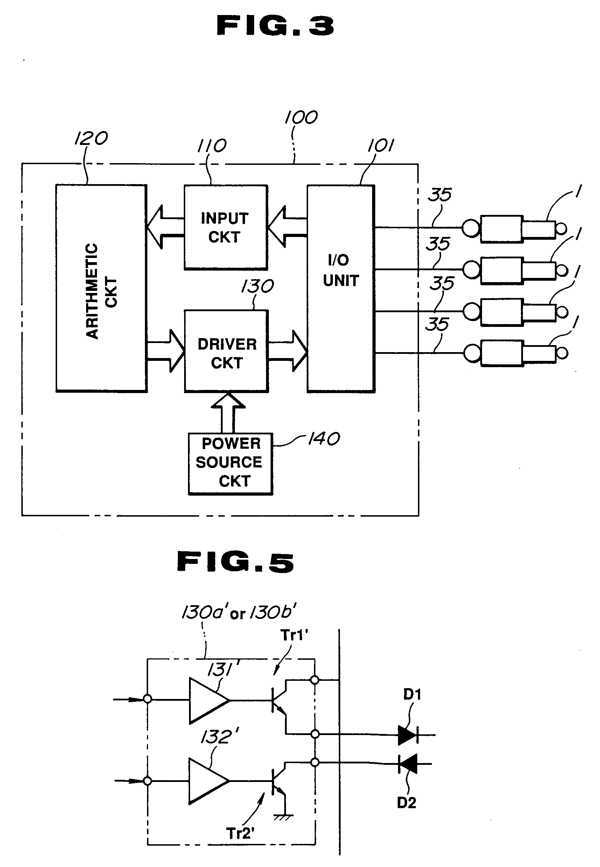

As shown in **Fig. 3**, the control unit **100** comprises a microprocessor based circuit including an input/output (I/O) port **101**, an input circuit **110**, an arithmetic circuit **120**, a driver circuit **130** and a driver power source circuit **140**. The I/O unit **101** is connected to respective damping control mechanisms **70** of the shock absorbers **1** disposed in front-left, front-right, rear-left and rear-right suspension systems via the cables **62** and **92** of the wiring harnesses **35**. The compression mode pressure indicative signals **Sp** and the expansion mode pressure indicative signals **Ss** generated by the piezoelectric elements **60** and **90** of respective shock absorbers **1** are input to the control unit **100** through the I/O port **101**. The I/O unit **101** has a plurality of control channels respectively adapted to control the piezoelectric elements **60** and **90** in respective shock absorbers **1** of front-left, front-right, rear-left and rear-right suspension systems, though **Fig. 4** shows only one shock absorber **1**. Each control channel has first and second I/O sections **101a** and **101b** for receiving pressure indicative signals **Sp** and **Ss** and outputting the control signals **S**_{**A**} and **S**_{**B**}. The first control section **101a** has a capacitor **C₁** for receiving the compression mode pressure indicative signal **Sp** and serving as a filter for removing noise direct current component in input signal. The first control section **101a** also has a pair of diodes **D₁** and **D₂** arranged at opposite polarities.

Similarly, the second control section **101b** has a capacitor **C₁₁** for receiving the compression mode pressure indicative signal **Ss** and serving as a filter for removing noise direct current component in input signal. The second control section **101b** also has a pair of diodes **D₁₁** and **D₁₂** arranged at opposite polarities.

The capacitors **C₁** and **C₁₁** are connected to first and second sections **110a** and **110b** of the input circuit **110** respectively. The first section **130a** includes a switching transistor **Tr₃** and an amplifier **112**. The switching transistor **Tr₃** has a base electrode connected to one output terminal of the arithmetic circuit to receive therefrom a selector command. The transistor **Tr₃** has a collector electrode connected to a junction between the capacitor **C₁** of the I/O unit **101** and the amplifier **112**. The emittor electrode of the switching transistor **Tr₃** is grounded. In addition, the first section **110a** includes a diode **D₄** and a resistor **R₈**. With the shown construction, the selector command is normally held OFF to input LOW level command to the base electrode of the switching transistor **Tr₃**. Therefore, the switching transistor **Tr₃** is normally held OFF to break connection between the junction and the ground. At this position, the compression mode pressure indicative signal **Sp** is fed to the amplifier **112** and subsequently to the arithmetic circuit **120**. On the other hand, the switching transistor **Tr₃** is responsive to the HIGH level selector command to turn ON to establish grounding circuit for grounding the junction between the capacitor **C₁** and the amplifier **112**. As a result, the compression mode pressure indicative signal **Sp** from the first piezoelectric element **60** is grounded. Therefore, the input to arithmetic circuit **120** from the amplifier **112** becomes substantially zero.

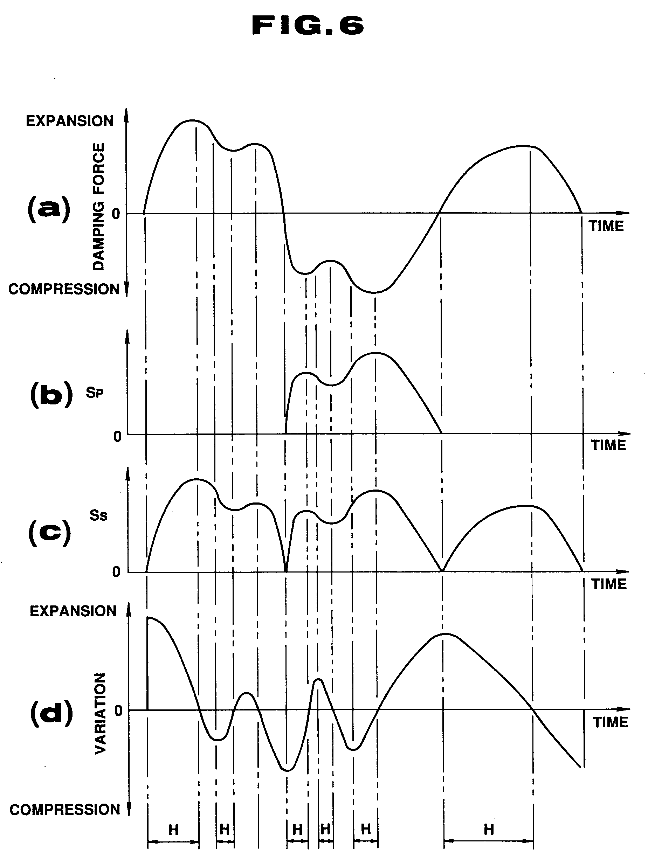

It should be should be appreciate, though **Fig. 5** shows simple block **110b** to show the second section of the input circuit, the circuit construction and function of the second section are identical to that discussed with respect to the first section.

The driver circuit **130** also includes first and second sections **130a** and **130b**. The first section **130a** of the driver circuit **130** has a control section **130c** and a switching section **130d**. Both of the control section **130c** and the switching section **130d** are connected to the arithmetic circuit **120** for receiving the expansion mode control signal **S**_{**A**}. The control section **130c** has an operational amplifier **131** high compares the expansion mode control signal level **S**_{**A**} with a feedback signal level fed back from the output end via a voltage divider constituted by resistors **R₂** and **R₃**. As long as the expansion mode control signal level is higher than the feedback signal level, the output level of the operational amplifier **131** outputs LOW level signal to maintain the input level of a gate electrode of a transistor **Tr₄** at LOW level. Therefore, the bias at the collector electrode of the transistor **Tr₄** becomes HIGH to turn a transistor **Tr₁** ON. By turning ON of the transistor **Tr₁**, the driver voltage is fed to the piezoelectric element **60** to expand the axial length of the latter to switch the damping mode of the damping mode control mechanism **70** from SOFT mode to HARD mode.

On the other hand, the switching section **130d** also has an operational amplifier **132**. The operational amplifier **132** receives the expansion mode control signal **S**_{**A**} and compares the expansion mode control signal level with a reference level which is input from the driver power source circuit via a resistor **R₅** and a voltage divider constituted by resistors **R₆** and **R₇**. With this circuit connection, the output of the operational amplifier **132** is maintained at LOW level to maintain a switching transistor **Tr₂** at non-conductive state for blocking communication between the diode **D₂** and the ground while the input level from the arithmetic circuit **120** stays lower than a reference level input from the voltage divider of the resistors **R₆** and **R₇**. It should be noted that the reference level is determined by the resistances of the resistances of the resistors **R₆** and **R₇**, which reference level is set at a level corresponding to a predetermined initial stress level to exert on the first piezoelectric element **60**. On the other hand, when the expansion mode control signal level **S**_{**A**} from the arithmetic circuit is higher than or equal to the reference level, the output level of the operational amplifier **132** turns into HIGH level to turn the transistor **Tr₂** ON. As a result, the diode **D₂** is connected to the ground via the transistor **Tr₂**. Therefore, the voltage signal as the driver voltage on the cable **62** is grounded so that the expansion mode control signal voltage **S**_{**A**} applied to the first piezoelectric element **60** can be discharged. The Transistor **Tr₂** is maintained in conductive state until the potential at the first piezoelectric element **60** drops to the initial level, at which the input level from the arithmetic circuit is lowered across the reference level.

It should be noted while the shown construction employs a specific circuit construction to implement the desired mode switching operation for switching operational mode of the first piezoelectric element **60** between a sensor mode for monitoring the fluid pressure in the lower working fluid chamber **15** and an actuator mode for controlling damping mode, it is possible to employ different construction of circuit. For example, as shown in **Fig. 5**, each of the output circuits **130a** and **130b** can comprise a pair of buffer amplifier **131**′ and **132**′ and transistors **Tr₁**′ and **Tr₂**′. In such case, the arithmetic circuit **120** selectively feeds the expansion mode control signal **S**_{**A**} for the buffer amplifiers **131**′ and **132**′. Namely, while the harder damping characteristics is to be ordered, the arithmetic circuit **120** feeds the expansion mode control signal **S**_{**A**} to the buffer amplifier **131**′ to turn the transistor **Tr₁**′ conductive to apply controlled voltage of the expansion mode control signal. On the other hand, in order to lower damping characteristics, the expansion mode control signal is fed to the buffer amplifier **132**′ to make the transistor **Tr₂** ON to complete grounding circuit for discharging the control signal voltage applied to the first piezoelectric element **60**.

As will be seen herefrom, the piezoelectric element **60** acting for monitoring the fluid pressure level in the lower working chamber **15**, the capacitor **C₁** of the first section **101a** of the I/O unit **101**, the first section **110a**, the arithmetic circuit **120**, the second section **130b** of the output circuit and pair of diodes **D₁₁** and **D₁₂** of the second section **101b** of the I/O unit **101**, and the piezoelectric element **90** acting for adjusting the damping mode of the damping mode control mechanism **70** form a compression mode control channel. On the other hand, the second piezoelectric element **90** acting for monitoring the fluid pressure level in the upper working chamber **14**, the capacitor **C₁₁** of the second section **101b** of the I/O unit **101**, the second section **110b**, the arithmetic circuit **120**, the second section **130a** of the output circuit and pair of diodes **D₁** and **D₁** of the first section **101a** of the I/O unit **101**, and the piezoelectric element **60** acting for adjusting the damping mode of the damping mode control mechanism **70** form an expansion mode control channel.

In order to initially set the piezoelectric elements **60** and **90**, adjustment is performed by means of the adjuster nuts **53** and **20**. Namely, a predetermined voltage is applied for respective piezoelectric elements **60** and **90**. At this position, the adjusted nuts **53** and **20** are rotated to adjust stress to be exerted on the piezoelectric elements **60** and **90**. This adjustment is continued until the outlet levels of the piezoelectric elements **60** and **90** become a predetermined level.

The operation to be performed in the preferred embodiment of the suspension system will be discussed herebelow with reference to **Figs. 6** to **8**.

As shown in **Fig. 6(c)**, the fluid pressure in the upper working chamber **14** is monitored by the second piezoelectric element **90** during the piston expansion stroke. The piezoelectric element **90** is thus produces the the expansion mode pressure indicative signal **Ss**. At this time, since the output first piezoelectric element **60** is maintained at zero level, discrimination can be made that the piston is in the expansion stroke. Discrimination is made by the arithmetic circuit **120** in the control unit **100**. Then, the arithmetic circuit **120** performs arithmetic operation to derive variation rate of the expansion mode pressure indicative signal **Ss**. The variation rate of the pressure indicative signals **Ss** and **Sp** is shown in **Fig. 6(c)**. When the variation rate reaches a predetermined value, the expansion mode control signal ordering harder damping characteristics is output to switch the damping mode from SOFT mode to HARD mode, as shown in periods labeled **H** in **Fig. 6(d)**. The damping mode is switched back to SOFT mode from the HARD mode when the variation rate decreases across a zero.

On the other hand, during the piston compression stroke, the fluid pressure in the lower working chamber **15** is monitored by both of the first and second piezoelectric elements **60** and **90**. The first piezoelectric element **60** then produces the compression mode pressure indicative signal **Sp**. At the same time, the second piezoelectric element **90** produces the expansion mode pressure indicative signal **Ss**. Therefore, judgement is then made that the piston is in the compression stroke by the arithmetic circuit **120**. Therefore, the arithmetic circuit **120** calculates variation rate of the compression mode pressure indicative **Sp**. When the variation rate derived on the basis of the compression mode pressure indicative signal **Sp** reaches the predetermined value, the compression mode control signal **S**_{**B**} is output to the second piezoelectric element **90** to switching damping mode from the SOFT mode to HARD mode. Similarly to the expansion mode, the damping mode will be switched back to the SOFT mode when the variation rate decreases across zero.

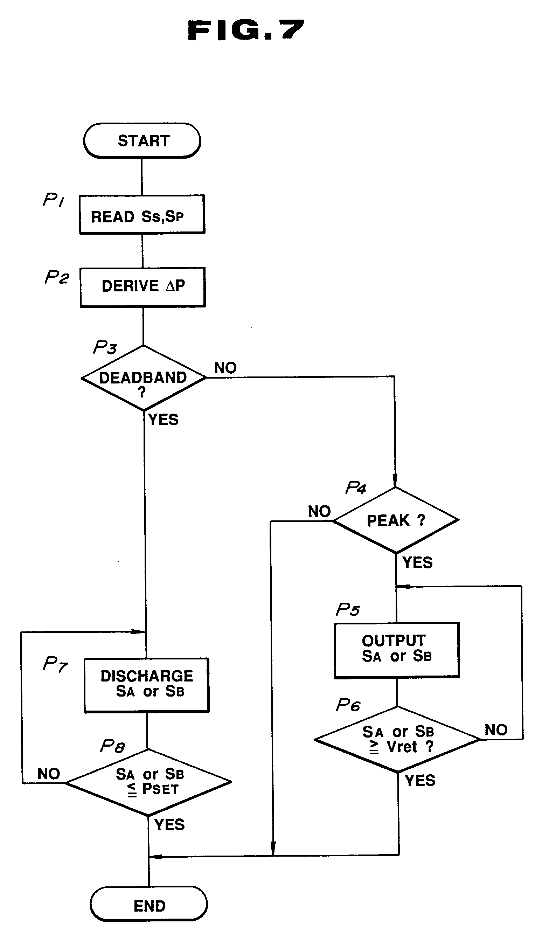

**Fig. 7** shows a flowchart showing operation performed in the arithmetic circuit. Immediately after starting execution, the expansion mode pressure indicative signal **Ss** and the compression mode pressure indicative signal **Sp** are read out at a step **P1**. Then, discrimination is made for the piston stroke direction on the basis of the read expansion mode pressure indicative signal **Ss** and compression mode pressure indicative signal **Sp**. As set forth, the piston expansion stroke is detected when the read compression mode pressure indicative signal **Sp** is held zero. On the other hand, when the compression mode pressure indicative signal **Sp** is greater than zero, the piston compression stroke is detected. The arithmetic circuit **120** thus selects one of the expansion mode pressure indicative signal **Ss** and the compression mode pressure indicative signal. Then, at a step **P2**, variation rate **ΔP** is derived on the basis of the selected one of the expansion mode pressure indicative signal **Ss** and the compression mode pressure indicative signal **Sp**. Practically, the variation rate **ΔP** is calculated by differentiating the selected one of the pressure indicative signals **Ss** and **Sp**.

Here, the variation rate **ΔP** of the pressure to be exerted on the first and second piezoelectric elements **60** and **90** becomes maximum at the initial space of the piston expansion and compression stroke and becomes minimum (zero) at the peak of vibration. On the other hand, the piston stroke speed becomes higher according to increasing the piston stroke and according to shortening of vibration cycle period. Therefore, by monitoring the variation rate **ΔP**, magnitude of input vibration can be detected for quicker response. This may provide higher response characteristics to the input vibration in controlling the suspension mode.

It should be appreciated, it is possible to provide a step between the steps **P1** and **P2** to check the frequency range of the pressure indicative signals for performing suspension control on the basis of the input pressure indicative signal within a predetermined frequency range.

At a step **P3**, the variation rate **ΔP** is checked whether it is in a predetermined deadband which is set with respect to the variation value zero. Namely, the deadband is defined by an upper deadband criterion and a lower deadband criterion. Therefore, the variation rate **ΔP** is compared with the upper and lower deadband criteria to make judgement that the variation rate **ΔP** is in the deadband when the variation rate is smaller than or equal to the upper deadband criterion and is greater than or equal to the lower deadband. If the variation rate **ΔP** as checked at the step **P3** is output of the deadband, check is performed whether the variation rate reaches a peak or not, at a step **P4**. When the peak of the variation rate **ΔP** is detected as checked at the step **P4**, one of the expansion mode control signal **S**_{**A**} or the compression mode control signal **S**_{**B**} output to the corresponding one of the first and second piezoelectric elements **60** and **90** depending upon the discriminated piston stroke direction at a step **P5**. Then, at a step **P6**, the voltage level of the expansion mode control signal **S**_{**A**} or the compression mode control signal **S**_{**B**} output at the step **P5**, is checked whether the voltage level is higher than or equal to a voltage threshold level **V**_{**ref**}. The voltage threshold level **V**_{**ref**} is set at a minimum voltage for causing distortion in the corresponding one of the first and second piezoelectric element **60** or **90** in order to switch damping mode from the SOFT mode to the HARD mode. Unless, the control signal voltage level as checked at the step **P5** becomes higher than or equal to the voltage threshold level **V**_{**ref**}**,** process returns to the step **P5**. The steps **P₄** and **P₅** are repeated until the control signal voltage level becomes higher than or equal to the minimum voltage level for driving the associated one of the first and second piezoelectric element **60** and **90**. When the control signal voltage level becomes higher than or equal to the voltage threshold level **V**_{**ref**} as checked at the step **P6**, then process goes END.

Though the shown embodiment switches the damping mode between two stages, i.e. HARD mode and SOFT mode, it is possible to vary the damping characteristics in either in or both in the HARD and SOFT mode according to the vibration magnitude. Namely, since the distortion magnitude may essentially linearly proportional to the voltage applied thereto, linear or stepless variation of the damping characteristics can be obtained by linearly or steplessly varying the voltage of the control signal. Practically, it may be possible to vary the control signal voltage according to variation of the variation rate **ΔP**. Furthermore, it may also be possible to determine the control signal voltage corresponding to the peak level of the variation rate **ΔP**.

On the other hand, the peak of the variation rate **ΔP** is not detected as checked at the step **P3**, check is performed whether it indicates the variation rate is zero, at a step **P6**. If the variation rate **ΔP** is greater than zero as checked at the step **P6**, process directly goes to END.

On the other hand, when the variation rate **ΔP** is within the deadband as checked at the step **P3**, the switching transistor **Tr₂** in the corresponding one of the first and second sections **130a** and **130b** is turned ON to discharge the voltage applied to the piezoelectric element **60** and **90**, at a step **P7**. Then, at a step **P8**, one of the expansion mode pressure indicative signal **Ss** and the compression mode pressure indicative signal **Sp**, which is selected at the step **P1**, is again checked against a set value **P**_{**set**}. As long as the checked pressure indicative signal is greater than the set value **P**_{**set**} as checked at the step **P8**, the steps **P7** and **P8** are repeated to discharge the voltage applied corresponding one of the piezoelectric element **60** or **90** at a level lower than or equal to the set value **P**_{**set**}.

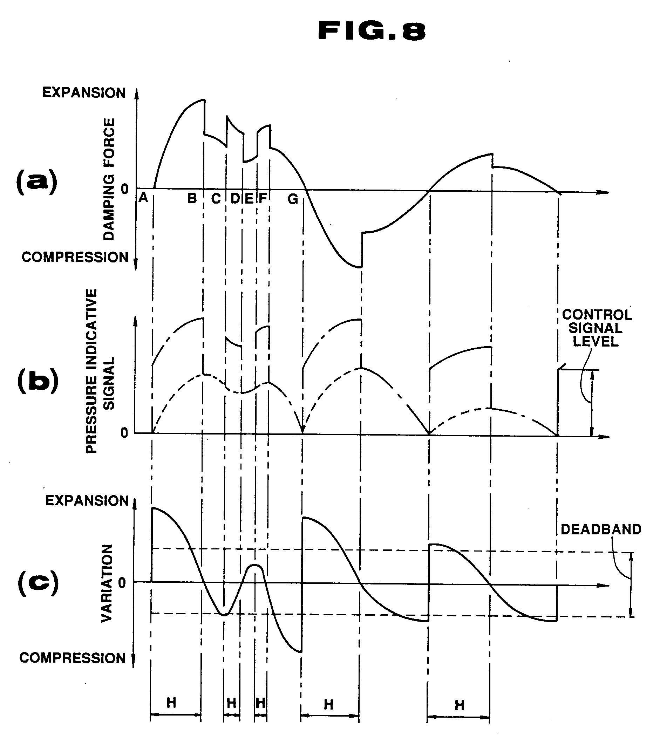

**Fig. 8** shows timing chart showing example of operation practically performed in the preferred embodiment of the suspension system according to the present invention. In the shown example, it is assumed that the variation rate **ΔP** of the expansion mode pressure indicative signal **Ss** and the compression mode pressure indicative signal **Sp** varies as shown in **Fig. 8(c)**. At a point **A**, the variation rate **ΔP** rapidly increased to be greater than or equal to the predetermined value **P**_{**ref**}. Then, the damping mode is switched from SOFT mode to HARD mode as shown in the period between the point **A** and a point **B**. During this period, the pressure indicative signal **Ss** or **Sp** is shifted in a magnitude corresponding to the voltage level of the driver signal exerted on the corresponding piezoelectric element, as shown by one-dotted line in **Fig. 8(b)**. As can be seen from **Fig. 8(b)**, the pressure indicative signal thus varies according to variation of the fluid pressure in the corresponding one of the upper and lower working chamber as shown by broken line in **Fig. 8(b)**. At the point **B**, the vibration reaches the peak thus the variation rate **ΔP** becomes zero. In response to this, the damping mode is switched from HARD mode to SOFT mode.

As seen from **Fig. 8(a)**, assuming that the vibration is caused in rebounding direction to cause expansion stroke of the piston, the damping force created against the piston expansion stroke is increased by setting the damping mode at HARD mode as that shown in the period between the point **A** and the point **B**. After **B**, the piston strokes in the compression direction to return the initial position. In such case, the damping mode is set at SOFT mode for effectively absorbing the vibration energy as shown in the period between the point **B** and a point **C**. At the point **C**, variation rate **ΔP** in the compression mode reaches a value greater than the predetermined value **P**_{**ref**} to again causing switching of the damping mode from SOFT mode to HARD mode. Therefore, from the point **C** to a point **D** greater damping force against the piston stroke is generated. Similarly to the process set forth with respect to the point **B**, the variation rate **ΔP** becomes zero at the point **D**. On the other hand, at the point **E**, the variation rate **ΔP** again reaches the peak. However, since the variation rate is within the deadband as illustrated in **Fig. 8(c)**, the damping mode is not switched into HARD mode and thus is maintained at SOFT mode during the period between the point **E** and point **F**. By repeating the foregoing process, the damping modes are switched between HARD mode and SOFT mode during the period between the points **F** and **G**.

As will be appreciated herefrom, since the shown embodiment performs damping mode control in piston expansion and compression strokes independently of each other, effective suppression of piston strokes and absorption of the vibration energy can be achieved. Furthermore, in the shown embodiment, since the first piezoelectric element **60** is active for detecting fluid pressure in the lower working chamber **15** during piston compression stroke and the second piezoelectric element **90** is active for adjusting damping mode between the HARD mode and SOFT mode in the piston compression stroke; and since the second piezoelectric element **90** is active for detecting fluid pressure in the upper working chamber **14** during piston expansion stroke and the second piezoelectric element **60** is active for adjusting damping mode between the HARD mode and SOFT mode in the piston expansion stroke, monitoring of the fluid pressure and damping mode control can be performed independently at the same time. Therefore, damping mode control with high precision and high response characteristics can be obtained.

In addition, in accordance with the shown embodiment, the shock absorber is maintained in soft against relatively small magnitude of vibration. This will successfully avoid rough ride feeling and thus assures riding comfort. Namely, as is well known, the vibration energy input from the road wheel is usually have small magnitude and high frequency, which vibration energy will not influence for vehicle driving stability and is better to be absorbed so as not to be transmitted to the vehicle body for assuring riding comfort. On the other hand, the vibration energy input from the vehicle body is generally caused by vehicular attitude change. This has to be damped for assuring vehicle driving stability. Therefore, by providing the deadband in controlling damping mode of the shock absorber, both of riding comfort and driving stability can be achieved at high level.

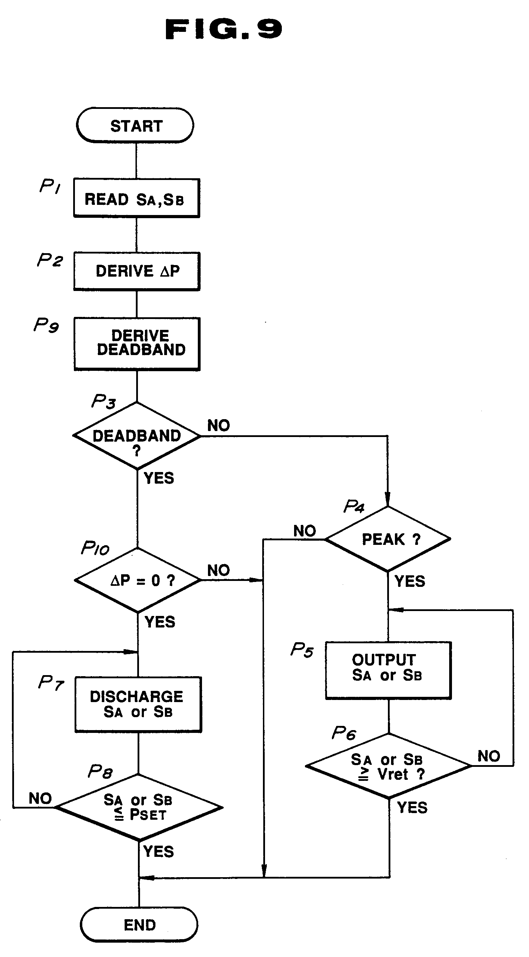

On the other hand, the magnitude of vibration energy of road shock and vehicular attitude change tends to be varies according to the vehicle speed. Namely, higher vehicular speed may generate greater magnitude of road shock input from the road wheel and cause greater attitude change on the vehicle body. Therefore, it is further preferable to vary the width of the deadband, i.e. the upper and lower deadband criteria, depending upon the vehicle speed. **Fig. 9** shows modification of the routine for controlling damping mode of the shock absorber according to the present invention, in which vehicle speed dependent variable deadband width is introduced for successfully adapting suspension control characteristics to the vehicle driving speed. In the shown routine, an additional step **P9** is inserted between the steps **P2** and **P3** in the routine of **Fig. 7**. In the additional step **P9**, the width of the deadband relative to the variation rate zero level is determined according to a vehicle speed. The width of the deadband can be varied in various fashion. In addition, an additional step **P10** is added between the steps **P3** and **P7**. In the additional step **P10**, check whether the variation rate **ΔP** is zero or not, is performed. When the variation rate is not zero, process directly goes END jumpting the steps **P7** and **P8**. On the other hand, when the variation rate is zero as checked at the step **P10**, then process goes to the step **P7**.

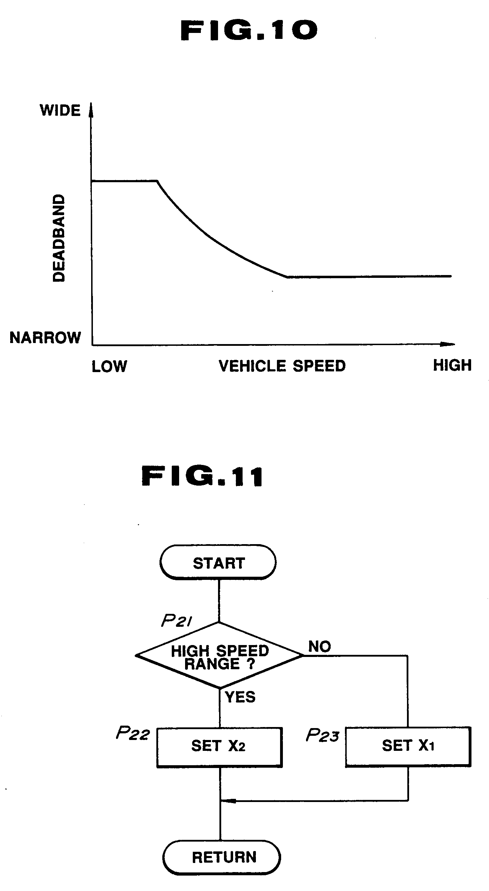

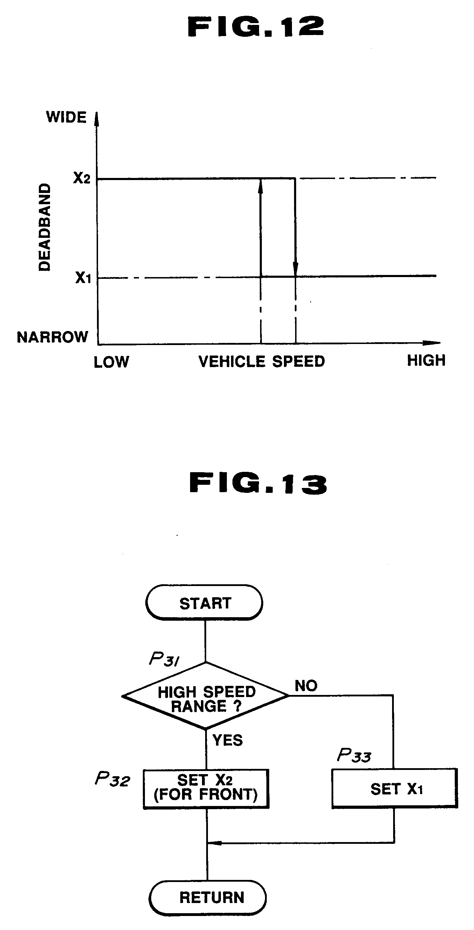

In the shown process adjustment of the width of the deadband can be done in various ways. For example, in **Fig. 10**, the width of deadband is varied continuously according to variation of the vehicle speed. On the other hand, in the example of **Fig. 12**, the width of the deadband is varied between wide and narrow when the vehicle speed is varied across a predetermined vehicle speed criterion. It should be appreciated that in either case, the variation characteristics of the width of the deadband may be determined through experiments with respect to the required performance and characteristics of the vehicle to which the suspension system being installed and other factors. As will be seen from **Fig. 10**, in the former case, the width of the deadband is set broader at low vehicle speed range. When the vehicle speed is lower than a predetermined low vehicle criterion, the width of the deadband is maintained constant at a predetermined maximum value. On the other hand, when the vehicle speed is higher than or equal to the low speed criterion and lower than or equal to a predetermined high vehicle speed criterion, the width of the deadband is varied according to variation of the vehicle speed in non-linear fashion. When the vehicle speed is higher the high vehicle speed criterion, the width of the deadband is maintained at a predetermined minimum width.

In order to implement the foregoing process, the arithmetic circuit **120** may include a memory for storing the characteristics of **Fig. 10** in a form of a look-up table. Table look-up may be performed in terms of the vehicle speed for deriving the deadband width.

On the other hand, in the latter case of **Fig. 12**, the width of the deadband is switched from wider width to narrower width when the vehicle speed increases across a predetermined narrower width criterion and is switched from narrower width to wider width when the vehicle speed decresses across a predetermined narrower width criterion which is set to be lower than the wider width criterion so as to provide histerisis in selection of the wide and narrower width of the deadbands.

In the latter case, it may also be possible to perform different mode of suspension control for respective of front and rear suspension systems. One possible mode is to switch into narrower deadband from wider deadband for both of front and rear suspension systems simultaneously in response to increasing of the vehicle speed across the narrower width criterion. Alternatively, it is possible to switch the width of the deadbands for the front and rear suspension systems at different timing for providing different response characteristics at the front and rear suspension systems.

Process of switching the width of the deadbands for the front and rear suspension systems simultaneously will be discussed with reference to **Fig. 11**. As seen from **Fig. 11**, judgement is performed whether the vehicle speed is in a range demanding narrower width of the deadband, at a step **P21**. In practice, in the step **P21**, check is at first performed whether the current width of the deadband is wide or narrow. If the current deadband width is wide **X₂**, the vehicle speed is compared with the narrower width criterion at the step **P21**. On the other hand, when the current deadband width is narrow **X₁**, the vehicle speed is compared with the wider width criterion at the step **P21**. When the judgement made in the step P21 that the narrower deadband is required, the width of the deadband is set at narrower width **X₂** at a step **P22**. On the other hand, when the judgement made in the step **P21** that the wider deadband is required, the width of the deadband is set at wider width **X₁** at a step **P23**.

Process of setting the width of the deadbands for the front and rear suspension systems at different width will be discussed with reference to **Fig. 13**. As seen from **Fig. 13** and similarly to the former process, judgement is performed whether the vehicle speed is in a range demanding narrower width of the deadband, at a step **P31**. When the judgement made in the step **P31** that the narrower deadband is required, the width of the deadband for the front suspension system is set at narrower width **X₂** and maintain the width of the deadband for the rear suspension system at the wider width **X₁** at a step **P32**. By providing higher response characteristics for the front suspension system, harder damping characteristics can be obtained at the front suspension at earlier timing than the rear suspension system. Because that the weight at the front side of the vehicle is normally greater than the rear side, inertia moment to be created by the vibration is greater than therear side. Therefore, by providing higher response characteristics, damping efficiency at the front side becomes higher to provide higher vehicular stability. This would be particularly beneficial to introduce for a front-engine, front-wheel drive type vehicle. On the other hand, when the judgement made in the step **P21** that the wider deadband is required, the width of the deadband of both of the front and rear suspension systems is set at wider width **X₁** at a step **P33**.

Though the specific processes in setting the deadband are discussed hereabove, it may be possible to take various processes and manners for setting the width of the deadband. For example, though the example of **Fig. 13** sets the width of the deadbands for the front and rear suspension systems at different width by maintaining the deadband width of the rear system at wider width in all vehicle speed range, it may also be possible to set the width of the deadband for the rear suspension system at a value narrower than the wider width but wider than the narrower width. In the alternative, it may also be possible to use different criteria of the vehicle speed to switch the width of the deadband between wider width and narrower width.

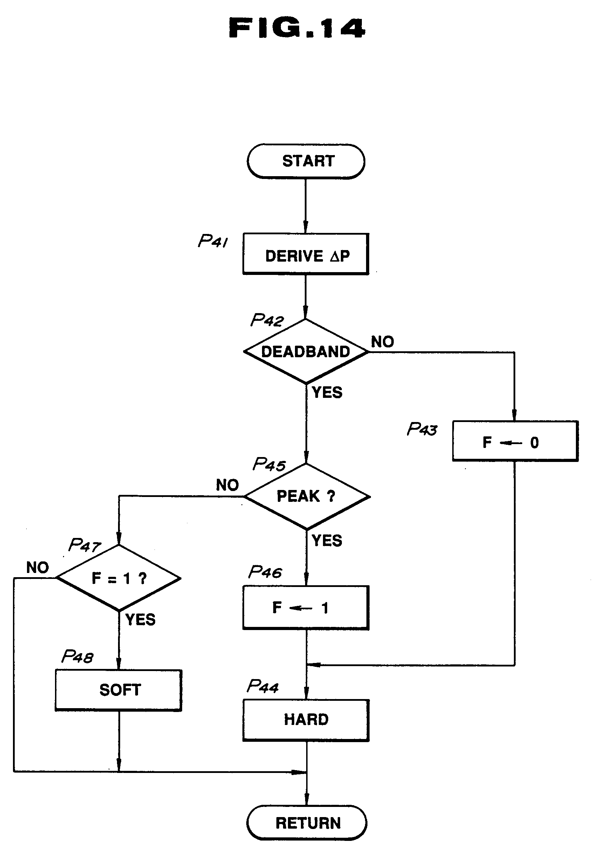

**Fig. 14** shows another process of suspension control to be performed by the arithmetic circuit **120** for implementing another process of suspension control according to the invention. In the shown process, suspension characteristics is normally maintained at HARD mode for creating greater damping force for higher driving stability without causing degradation of the riding comfort. For this, the shown process, at first, read out the pressure indicative signals **Sp** and **Ss** and selects one of the pressure indicative signals depending upon the piston stroke direction, at a step **P41**. At the step **P41**, arithmetic operation is performed for deriving the variation rate **ΔP**. Then, the variation rate **ΔP** is compared with a predetermined deadband criteria for discriminating whether the variation rate is within or out of the deadband, at a step **P42**. When the variation rate **ΔP** is within the deadband as checked at the step **P42**, a HARD mode indicative flag **F** is reset at a step **P43**. Subsequently, a HARD mode control signal is fed one of the upper and lower piezoelectric elements **60** and **90** which is selected depending upon the piston stroke direction, is fed for increasing flow restriction and thus harden damping characteristics, at a step **P44**. Thereafter process goes to END. On the other hand, when the variation rate **ΔP** as checked at the step **P42** is output the deadband, then check is performed whether the variation rate reaches a peak value or not at a step **P45**. If the peak value of the variation rate **ΔP** is detected at the step **P45**, the HARD mode indicative flag **F** is set at a step **P46**. Subsequently, the process goes to the step **P44**, in which the HARD mode control signal is fed one of the upper and lower piezoelectric elements **60** and **90** which is selected depending upon the piston stroke direction, is fed for increasing flow restriction and thus harden damping characteristics. If the variation rate **ΔP** as checked at the step **P45** is not the peak value, then, further check is performed at a step **P47** whether the HARD mode indicative flag **F** is set. If the HARD mode flag **F** is not set as checked at the step **P47**, then the SOFT mode control signal is fed to the corresponding one of the upper and lower piezoelectric element **60** and **90** for switching damping mode into SOFT mode at a step **P48**. On the other hand, if the HARD mode indicative flag **F** is set as checked at the step **P47**, then process directly goes to END.

Though the process set forth above, suspension control is performed to maintain the damping characteristics of the shock absorber HARD mode while the variation rate **ΔP** is maintained within the deadband. This means that since judgement can be made than the vehicle is traveling on a substantially smooth road, HARD mode suspension characteristics may not cause substantial degradation of the riding comfort and may providing higher driving stability. When the magnitude of vibration becomes greater to cause increasing of the variation rate output of the deadband, the damping characteristics is maintained SOFT for effectively absorbing vibration energy. The damping mode is maintained at SOFT mode until the variation rate reaches the peak. After the variation rate reaches the peak, the damping mode is switched into HARD mode for effectively damping reactive motion for earlier stabilization of the vibration. The HARD damping mode is maintained until the variation rate varies across the deadband criteria.

Such process may provide higher driving stability with maintaining the riding comfort at satisfactory level.

While the present invention has been disclosed in terms of the preferred embodiment in order to facilitate better understanding of the invention, it should be appreciated that the invention can be embodied in various ways without departing from the principle of the invention. Therefore, the invention should be understood to include all possible embodiments and modifications to the shown embodiments which can be embodied without departing from the principle of the invention set out in the appended claims.

## Claims

1. An automotive suspension system comprising: a shock absorber (1) comprising a cylinder tube (3) connected with one of a vehicle body and a suspension member rotatably supporting a road wheel, and a piston (4) which is connected with the other of said vehicle body and road wheel, and slidably received in said cylinder tube so as to divide the internal cavity of said cylinder tube into first and second working fluid chambers (14,15); fluid communication means (46,47,48,76,77) for establishing fluid communication between said first and second chambers (14,15) with a limited fluid flow rate for generating a damping force against relative motion between said piston (4) and said cylinder tube (3); valve means (74,75) associated with said fluid communication means for regulating the flow restriction of said fluid communication means to vary a damping characteristic of said shock absorber; sensing means (60,90) for responding to a fluid pressure of said shock absorber and producing a first pressure signal (Sₚ,Sₛ); actuator means (90,60) for manipulating said valve means to vary the flow restriction characteristic in response to a control signal (S_{B},S_{A}); and controlling means (100) for controlling the damping characteristic by producing said control signal in accordance with the pressure signal; characterised in that said controlling means (100) determines a variation rate of the sensed pressure represented by said pressure signal (Sₚ,Sₛ), and varies the damping characteristic toward a hard mode (P₅,P₆) when said pressure variation rate varies beyond a predetermined low range (P₃), and reaches a peak value (P₄).

2. An automotive suspension system according to claim 1, characterized in that said controlling means (100) varies the damping characteristic from the hard mode toward a soft mode (P₇,P₈) when said pressure variation rate decreases to a predetermined value (P₃).

3. An automotive suspension system according to claim 2, characterised in that said predetermined value is equal to zero (P₁₀).

4. An automotive suspension system according to claim 2, characterised in that said controlling means (100) varies the damping characteristic toward the soft mode when said pressure variation rate enters the said predetermined low range (P₃).

5. An automotive suspension according to claim 4, characterized in that said sensing means comprises a vehicle speed sensing means, and said controlling means (100) determines said dead band in accordance with the vehicle speed sensed by said vehicle speed sensing means (P₂₁,P₃₁).

6. An automotive suspension system according to one of claims 1 to 5, characterized in that said sensing means comprises a first pressure sensing means (60) for sensing the pressure in the first chamber (15) and a second pressure sensing means (90) for sensing the pressure in the second chamber (14), and said actuator means comprises a first actuating means (90) for varying the damping characteristic during a compression stroke of the piston toward the bottom of the cylinder tube, and a second actuating means (60) for varying the damping characteristic during an expansion stroke of the piston away from the bottom of the cylinder tube, and that said controlling means (100) includes a means for determining said time rate of change in accordance with the output signals (Sₚ,Sₛ) of said first and second pressure sensing means (60,90) and for producing first and second control signal (S_{B},S_{A}) sent to said first and second actuating means (90,60).

## Patentansprüche

1. Kraftfahrzeugaufhängungssystem, welches umfaßt: einen Stoßdämpfer (1) mit einer Zylinderhülse (3), die mit einer Seite der Karosserie verbunden ist, und einem Aufhängungselement, das ein Rad drehbar hält, sowie einen Kolben (4), der mit der anderen Seite der Karosserie und dem Rad verbunden ist und gleitend in der Zylinderhülse aufgenommen wird, um den Innenraum der Zylinderhülse in eine erste und eine zweite Flüssigkeitsarbeitskammer (14, 15) zu unterteilen; Flüssigkeitsverbindungsmittel (46, 47, 48, 76, 77) zur Herstellung einer Flüssigkeitsverbindung zwischen der ersten und der zweiten Kammer (14, 15) mit begrenztem Durchsatz zur Erzeugung einer Dämpfungskraft gegenüber der relativen Bewegung zwischen dem Kolben (4) und der Zylinderhülse (3); Ventileinrichtungen (74, 75) an den Flüssigkeitsverbindungsmitteln zur Regulierung der Durchsatzmenge der Flüssigkeitsverbindungsmittel, um die Dämpfungseigenschaft des Stoßdämpfers zu variieren; Meßwertaufnehmer (60, 90) zum Reagieren auf einen Flüssigkeitsdruck des Stoßdämpfers und zum Erzeugen eines ersten Drucksignals (Sp, Ss); Betätigungseinrichtungen (60, 90) zum Betätigen der Ventileinrichtungen, um die Durchsatzmenge als Reaktion auf ein Steuersignal (S_{B}, S_{A}) zu verändern, und eine Steuervorrichtung (100) zum Steuern der Dämpfungseigenschaft durch Erzeugung des Steuersignals entsprechend dem Drucksignal; dadurch gekennzeichnet daß die Steuervorrichtung (100) eine Änderungsgeschwindigkeit für den erfaßten Druck bestimmt, der durch das Drucksignal (Sp, Ss) dargestellt wird, und die Dämpfungseigenschaft in eine harte Betriebsart ändert (P5, P6), wenn die Druckänderungsgeschwindigkeit über einen vorgegebenen niedrigen Bereich hinaus variiert (P3) und einen Höchstwert erreicht (P4).

2. Kraftfahrzeugaufhängungssystem nach Anspruch 1, dadurch gekennzeichnet, daß die Steuervorrichtung (100) die Dämpfungseigenschaft vom harten zum weichen Modus verändert (P7, P8), wenn die Druckänderungsgeschwindigkeit auf einen vorgegebenen Wert (P3) sinkt.

3. Kraftfahrzeugaufhängungssystem nach Anspruch 2, dadurch gekennzeichnet, daß der vorgegebene Wert gleich null ist (P10).

4. Kraftfahrzeugaufhängungssystem nach Anspruch 2, dadurch gekennzeichnet, daß die Steuervorrichtung (100) die Dämpfungseigenschaften zu einem weichen Modus hin verändert, wenn die Druckänderungsgeschwindigkeit in einen vorgegebenen niedrigen Bereich gelangt (P3).

5. Kraftfahrzeugaufhängungssystem nach Anspruch 4, dadurch gekennzeichnet, daß der Meßwertaufnehmer einen Fahrzeuggeschwindigkeits-Aufnehmer umfaßt und die Steuervorrichtung (100) die tote Zone entsprechend der durch den Fahrzeuggeschwindigkeits-Aufnehmer erfaßten Fahrzeuggeschwindigkeit festlegt (P21, P31).

6. Kraftfahrzeugaufhängungssystem nach einem der Ansprüche 1 bis 5, dadurch gekennzeichnet, daß der Meßwertaufnehmer einen ersten Druckaufnehmer (60) zum Erfassen des Drucks in der ersten Kammer (15) und einen zweiten Druckaufnehmer (90) zum Erfassen des Drucks in der zweiten Kammer (14) umfaßt und die Betätigungsvorrichtung umfaßt: eine erste Betätigungseinrichtung (90) zum Verändern der Dämpfungseigenschaft während eines Verdichtungshubs des Kolbens zum Boden der Zylinderhülse sowie eine zweite Betätigungseinrichtung (60) zum Verändern der Dämpfungseigenschaft während eines Ausdehnungshubs des Kolbens vom Boden der Zylinderhülse weg, und wobei die Steuervorrichtung (100) eine Einrichtung zum Erfassen der Änderungsgeschwindigkeit entsprechend der Ausgabesignale (Sp, Ss) des ersten und zweiten Druckaufnehmers (60, 90) und zum Erzeugen eines ersten und zweiten Steuersignals (S_{B}, S_{A}) aufweist, welche zur ersten und zweiten Betätigungseinrichtung (90, 60) gesendet werden.

## Revendications

1. Système de suspension automobile comprenant : un amortisseur (1) comprenant un tube cylindrique (3) connecté à l'un d'une caisse de véhicule et d'un élément de suspension supportant à rotation une roue de voiture, et un piston (4) qui est connecté à l'autre desdites caisses de véhicule et roues de voiture, et reçu de façon coulissante dans ledit tube de cylindre de façon à diviser la cavité interne dudit tube cylindrique en des première et deuxième chambres de fluide de travail (14, 15); des moyens de communication de fluide (46,47,48,76,77) pour établir une communication de fluide entre lesdites première et deuxième chambres (14,15) avec un débit d'écoulement de fluide limité pour produire une force d'amortissement contre un mouvement relatif entre ledit piston (4) et ledit tube cylindrique (3); des moyens de soupape (74,75) associés auxdits moyens de communication de fluide pour régler la restriction à l'écoulement desdits moyens de communication de fluide pour faire varier une caractéristique d'amortissement dudit amortisseur; des moyens de détection (60,90) pour réagir à une pression de fluide dudit amortisseur et pour produire un premier signal de pression (Sp, Ss); des moyens d'actionnement (90,60) pour manipuler lesdits moyens de soupape afin de faire varier la caractéristique de restriction à l'écoulement en réponse à un signal de commande (S_{B}, S_{A}); et un moyen de commande (100) pour commander la caractéristique d'amortissement en produisant ledit signal de commande en accord avec le signal de pression; caractérisé en ce que ledit moyen de commande (100) détermine une vitesse de variation de la pression détectée représentée par ledit signal de pression (Sₚ, Sₛ) et fait varier la caractéristique d'amortissement vers un mode dur (P₅,P₆) lorsque ladite vitesse de variation de pression varie au-delà d'une plage basse prédéterminée (P₃) et atteint une valeur crête (P₄).

2. Système de suspension automobile selon la revendication 1, caractérisé en ce que ledit moyen de commande (100) fait varier la caractéristique d'amortissement du mode dur vers le mode souple (P₇, P₈) lorsque ladite vitesse de variation de pression diminue à une valeur prédéterminée (P₃).

3. Système de suspension automobile selon la revendication 2, caractérisé en ce que ladite valeur prédéterminée est égale à zéro (P₁₀).

4. Système de suspension automobile selon la revendication 2, caractérisé en ce que ledit moyen de commande (100) fait varier la caractéristique d'amortissement vers le mode souple lorsque ladite vitesse de variation de pression entre dans ladite plage basse prédéterminée (P₃).

5. Système de suspension automobile selon la revendication 4, caractérisé en ce que ledit moyen de détection comprend un moyen de détection de la vitesse du véhicule, et ledit moyen de commande (100) détermine ladite plage neutre en accord avec la vitesse du véhicule captée par ledit moyen de détection de la vitesse du véhicule (P₂₁, P₃₁).

6. Système de suspension automobile selon l'une des revendications 1 à 5, caractérisé en ce que ledit moyen de détection comprend un premier moyen de détection de pression (60) pour détecter la pression dans la première chambre (15) et un deuxième moyen de détection de pression (90) pour détecter la pression dans la deuxième chambre (14), et lesdits moyens d'actionnement comprennent un premier moyen d'actionnement (90) pour faire varier les caractéristiques d'amortissement pendant une course de compression du piston vers le fond du tube cylindrique, et un deuxième moyen d'actionnement (60) pour faire varier les caractéristiques d'amortissement pendant une course d'expansion du piston au loin du fond du tube cylindrique, et en ce que ledit moyen de commande (100) comprend un moyen pour déterminer ladite vitesse de changement en fonction de la durée en accord avec les signaux de sortie (Sp, Ss) desdits premier et deuxième moyens de détection de pression (60,90) et pour produire des des premier et deuxième signaux de commande (S_{B}, S_{A}) transmis auxdits premier et deuxième moyens d'actionnement (90,60).
